# EUROPÄISCHE PATENTSCHRIFT

(11) **EP 0 278 401 B1**
(45) Veröffentlichungstag und Bekanntmachung des Hinweises auf die Patenterteilung: **04.08.1993**
(21) Anmeldenummer: 88101616.6
(22) Anmeldetag: 04.02.1988
(51) Int. Cl.: B29C 49/02

(54) **Vorrichtung zum Herstellen eines einerends offenen und anderenends geschlossenen Kunststoff-Hohlkörpers**
Apparatus for producing a hollow plastic body with an open and a closed end
Appareil pour fabriquer un corps creux en matière plastique pourvu d'une extrémité ouverte et d'une extrémité fermée

(30) Priorität: 12.02.1987 DE 3704264
(43) Veröffentlichungstag der Anmeldung: 17.08.1988
(73) Patentinhaber: OSSBERGER-TURBINENFABRIK GMBH & CO., 91781 Weissenburg (DE)
(72) Erfinder: Linsz,Gerhard, D-8832 Weissenburg/Bay. (DE); Ossberger,Karl-Friedrich,Dr., D-8832 Weissenburg/Bay. (DE)
(74) Vertreter: Böhme, Volker, Dipl.-Ing.

(56) Entgegenhaltungen:
- DE-A- 2 528 964
- FR-A- 2 443 327
- US-A- 2 982 993
- US-A- 3 343 210
- US-A- 3 466 701
- US-A- 3 653 285
- US-A- 4 188 179

## Beschreibung

Die Erfindung betrifft eine Vorrichtung zum Herstellen eines einerends offenen und anderenends geschlossenen Hohlkörpers aus thermoplastischem Kunststoff durch Spritzgießen gemäß dem Oberbegriff von Anspruch 1
Bei einer bekannten (DE-PS 25 28 029) Vorrichtung dieser Art ist die Abzugseinrichtung mit einem Zapfen zur Erzeugung eines Loches in dem als Tubenmundstück ausgebildeten Kopfstück versehen, weisen die auf der Ringdüse aufsitzenden Bodenstücke Ansätze auf, die gegeneinander gepreßt den Boden des Körperteiles verschließen, und ist die Blaseinrichtung in der Abzugseinrichtung angeordnet dem Loch im Kopfstück zugeordnet. Nachteiligerweise lassen sich mit dieser bekannten Vorrichtung keine Hohlkorper herstellen, deren Kopfstück geschlossen ist und deren Boden einen Durchbruch aufweist. Ein solcher Behälter läßt sich auch nicht mit einer anderen bekannten (US-PS 33 94 209) Vorrichtung herstellen, bei der Blasformteil-Bodenstücke auf einer der Ringdüse vorgeordneten Formplatte aufsitzen und den Bereich, durch den der Rohrabschnitt hindurchtritt, freilassen und die Blaseinrichtung in der Ringdüse angeordnet einem Loch eines in der Formplatte befindlichen Kopfstückes zugeordnet ist.

Eine Aufgabe der Erfindung ist es daher, eine Vorrichtung der eingangs genannten Art zu schaffen, mit der sich Hohlkörper mit geschlossenem Kopfstück und durchbrochenem Boden herstellen lassen. Die erfindungsgemäße Vorrichtung ist, diese Aufgabe lösend, dadurch gekennzeichnet, daß die Abzugseinrichtung zur Formung eines nich außen geschlossenen Kopfstückes ausgebildet ist, daß die auf der Ringdüse aufsitzenden Bodenstücke einen im Körperteil-Boden gebildeten Durchbruch, der sich über den vom Ringspalt umschlossenen Bereich erstreckt, freilassen und daß die Blaseinrichtung in der Ringdüse angeordnet dem Durchbruch im Körperteil-Boden zugeordnet ist.

Bei der erfindungsgemäßen Vorrichtung wird bei der Ringdüse der mit Durchbruch versehene Boden erzeugt und wird dieser Durchbruch zum Einleiten der Blasluft verwendet, wobei der Boden per definitionem kein Kopfstück aufweist. Die in der Ringdüse angeordnete Blaseinrichtung ragt in der Regel aus der Ringdüse nicht heraus und nimmt nicht an der Formung eines Kopfstuckes teil. Es lassen sich Hohlkörper mit geschlossenem Kopfstück herstellen, die über den offenen Boden gefüllt werden, wobei viele verschiedene Möglichkeiten des geschlossenen Kopfstückes gegeben sind.

Besonders zweckmäßig und vorteilhaft ist es, wenn der Vorrichtung zum Herstellen eine Vorrichtung zum Abschneiden eines bodenseitigen, den Durchbruch umschließenden Randstreifens nachgeordnet ist. Es wird entweder der gesamte Boden oder ein Teil des Bodens abgeschnitten, um ein genau gelängtes Teil zu erhalten. Auch ist die durch Abquetschen mittels der Bodenstücke erzeugte Randkante häufig nicht in der erwünschten Weise glatt, was ein Nachschneiden zweckmaßig macht.

Mit der erfindungsgemäßen Vorrichtung wird ein neuartiger Hohlkörper auf neuartige Weise hergestellt. Das Kopfstück, das auf der Ringdüse in der Ausnehmung der Abzugseinrichtung gespritzt wird, weist keinen Durchlaß zwischen innen und außen auf. Nach dem Abziehen, d.h. dem Bilden des Rohrabschnittes werden die Bodenstücke nur soweit zusammengefahren, daß der bei der Ringdüse befindliche Endabschnitt des Rohrabschnittes gegen die Ringdüse geklemmt wird, um zum Aufblasen gehalten zu sein. Die Blasluft wird durch den Durchbruch des Bodens zugeführt.

Es ist denkbar, im Düsenkegel eine ständig offene Blasöffnung vorzusehen und Verunreinigungen der Blasöffnung, die beim Spritzen des Kopfstückes erfolgen, durch Blasen zu beseitigen. Besonders zweckmäßig und vorteilhaft ist es jedoch, wenn eine der Blaseinrichtung zugehörige Blasöffnung im Düsenkegel bei auf der Ringdüse sitzender Abzugseinrichtung mittels einer im Düsenkegel hin- und herverschiebbaren Nadel verschlossen ist. Hierdurch ist ein Eindringen von Kunststoff in die Blasöffnung ausgeschlossen, wodurch Stöhrungen des Betriebes und Verunreinigungen im Inneren des hergestellten Hohlkorpers vermieden sind.

Es ist denkbar, das Abscheren des Kunststoffes in der Düsenöffnung mittels eines im Düsenkegel hin- und herverschiebbaren Scherzylinders durchzuführen. Besonders zweckmaßig und vorteilhaft ist es jedoch, wenn die auf der Ringdüse aufsitzenden Blasformteil-Bodenstücke den Randbereich des Boden-Durchbruches gegen ein aus dem Düsenmundstück herausgefahrenes Endstück des Düsenkegels drücken. Hierbei wird eine axiale Hin- und Herverschiebung des Düsenkegels nicht nur zum Abschneiden des nachkommenden Kunststoffes, sondern auch zum Festhalten des Rohrabschnittendes zum Aufblasen verwendet.

Besonders zweckmäßig und vorteilhaft ist es z.B., wenn eine in dem Dusenkegel axial hin- und herverschiebbare Nadel mit einem Fortsetz in die Ausnehmung der auf der Ringdüse aufsitzenden Abzugseinrichtung ragt und wenn der Fortsatz länglich dünn ist und mit der Ausnehmung einen Hohlraum für ein nippelartiges Kopfstück begrenzt. Es ist hier ein Nippel angeformt, wobei der Hohlkörper z.B. zur Aufnahme von Klebstoff gedacht ist, und der Nippel wird zum Öffnen des fertigen gefüllten Hohlkörpers ganz oder teilweise abgeschnitten.

Besonders zweckmäßig und vorteilhaft ist es dabei, wenn der nippelartige Hohlraum nahe dem Ende der Ausnehmung eine umlaufende Querschnittsverengung aufweist. Durch die Querschnittsverengung ist das Abschneiden an einer vorgesehenen Stelle erleichtert oder ein Abreißen des Nippels ermöglicht.

Besonders zweckmäßig und vorteilhaft ist es weiterhin, wenn die Ausnehmung der Abzugseinrichtung an der der Ringdüse abgewendeten Seite als ringwandartige Höhlung ausgebildet ist und zu der Ringdüse hin eine Querwand-Höhlung bildet. Dies ist eine mit quer verlaufender Membran versehene Kopfstück-Gestaltung, die in der Praxis nur bei geschlossenen Kopfstücken verlangt wird und die jetzt mit einer Vorrichtung der hier zur Rede stehenden Art in Kunststoff gefertigt wird.

Besonders zweckmäßig und vorteilhaft ist es ebenso, wenn die Ausnehmung der Abzugseinrichtung auf der Seite der Ringdüse von einem in Achsrichtung hin- und herverschiebbaren Zapfen begrenzt ist, der bei auf der Ringdüse aufsitzender Abzugseinrichtung nach dem Spritzen des Kopfstückes gegen die Abzugseinrichtung fahrbar ist. Auf diese Weise läßt sich die geschlossene Querwand des Kopfstückes weit dünner fertigen, als es durch Spritzen alleine möglich ist. Es wird nämlich nach dem Spritzen der schon teilweise erkaltete Kunststoff gepreßt.

Auf diese Weise wird eine dünne Querwand aus Kunststoff geschaffen, die einfach durchbrechbar ist und z.B. durch eine Ringwand gegen unbeabsichtigte Verletzungen geschützt ist. Auch die Nadel mit dem in die Ausnehmung ragenden Fortsatz kann zum Spritzen für ausreichend große Querschnitte eingestellt werden und dann zum Pressen des teilerkalteten Kunststoffes vorgeschoben werden, um zumindest bereichsweise sehr dünne Wandstärken des Kopfstückes zu erzielen. Dies wird vornehmlich für eine dünne Wandstärke im Abreißbereich des Nippels vorgesehen.

Es ist auch möglich, das Kopfstück als verlorenes Stück vorzusehen, das nur dem Abziehen dient oder der Fuß eines nach oben offenen Behälters ist. Somit läßt sich bei einem mit der erfindungsgemäßen Vorrichtung hergestellten Hohlkörper das Kopfstück sehr variabel gestalten, solange es die Abzieh-Funktion erfüllt und keinen Durchbruch zum Blasen aufweist.

In der Zeichnung sind bevorzugte Ausführungsformen der Erfindung dargestellt und zeigt
- Fig. 1: schematisch in einem vertikalen Schnitt eine Vorrichtung zum Herstellen eines einerends offenen und anderenends geschlossenen Kunststoff-Hohlkörpers,
- Fig. 2: in einem vertikalen Schnitt wesentliche Teile einer weiteren Vorrichtung zum Herstellen eines einerends offenen und anderenends geschlossenen Kunststoff-Hohlkörpers, in einer ersten Betriebsstellung,
- Fig. 3: die Vorrichtung gemäß Fig. 2 in einer zweiten Betriebsstellung,
- Fig. 4: die Vorrichtung gemäß Fig. 2 in einer dritten Betriebsstellung,
- Fig. 5: in einem vertikalen Schnitt wesentliche Teile einer weiteren Vorrichtung zum Herstellen eines einerends offenen und anderenends geschlossenen Kunststoff-Hohlkörpers, in einer ersten Betriebsstellung,
- Fig. 6: die Vorrichtung gemäß Fig. 5 in einer zweiten Betriebsstellung,
- Fig. 7: die Vorrichtung gemäß Fig. 5 in einer dritten Betriebsstellung,
- Fig. 8: in einem vertikalen Schnitt wesentliche Teile einer weiteren Vorrichtung zum Herstellen elnes einerends offenen und anderenends geschlossenen Kunststoff-Hohlkörpers, in einer ersten Betriebsstellung,
- Fig. 9: die Vorrichtung gemäß Fig. 8 in einer zweiten Betriebsstellung,
- Fig. 10: die Vorrichtung gemäß Fig. 8 in einer dritten Betriebsstellung und
- Fig. 11: eine der Vorrichtung gemäß Fig. 1 zugeordnete Vorrichtung zum Abschneiden.

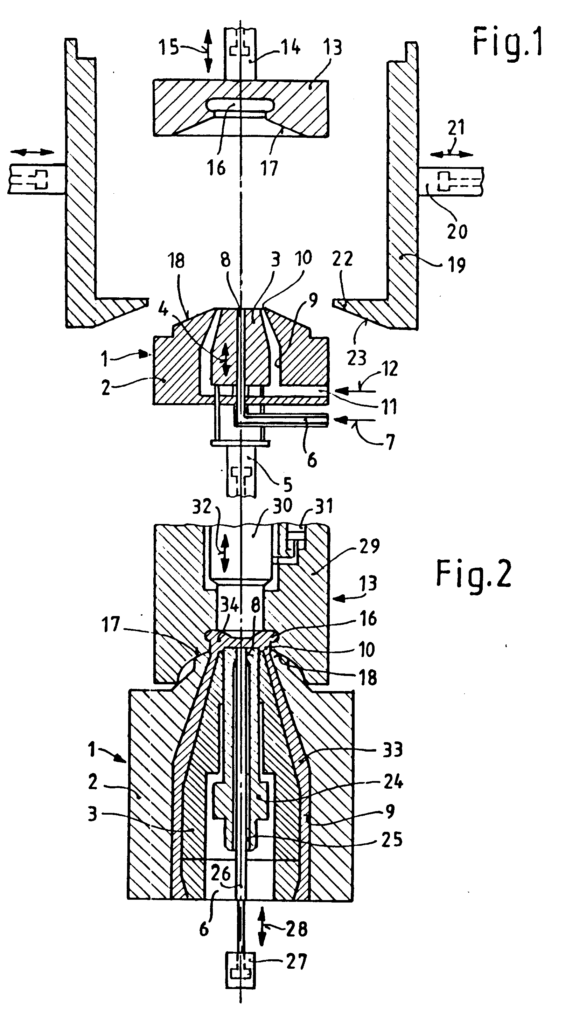

Die Vorrichtung gemäß Fig. 1 besitzt eine Ringdüse (1), die ein ortsfestes Düsenmundstück (2) umfaßt, in dem ein Düsenkegel (3) gemäß einem Doppelpfeil (4) mittels einer Kolben-Zylinder-Einrichtung (5) hin- und herbewegbar ist. Dem Düsenkegel (3) wird von hinten über eine Rohrleitung (6) gemäß einem Pfeil (7) Druckluft zugeführt, die den Düsenkegel (3) an der Vorderseite durch eine mittig angeordnete Blasöffnung (8) verläßt. Der Düsenkegel (3) und das Düsenmundstück (2) begrenzen zwischen sich einen Ringkanal (9), der nach vorne in eine ringspaltartige Düsenöffnung (10) übergeht und dem von hinten über eine Rohrleitung (11) gemäß einem Pfeil (12) thermoplastischer Kunststoff zugeführt wird. Zur Düsenöffnung (10) hin ist der Düsenkegel (3) unter einem geringeren Winkel konisch als die Innenwand des Düsenmundstückes, so daß die Düsenöffnung (10) abgesperrt wird, wenn der Düsenkegel (3) nach vorne geschoben wird.

Oberhalb der Ringdüse (1) ist eine Abzugseinrichtung (13) vorgesehen, die mittels einer Kolben-Zylinder-Einrichtung (14) gemäß einem Doppelpfeil (15) hin- und herbewegbar ist und die nach unten hin eine Ausnehmung (16) mit seitlichem Hinterschnitt bzw. seitlichem Hintergriff bildet, weshalb die Abzugseinrichtung in nicht naher gezeigter Weise teilbar und wieder zusammensetzbar ist. Die Abzugseinrichtung (13) weist eine radial schräg geneigte kreisringartige Auflageflache (17) auf, die einer Stirnfläche (18) des Düsenmundstückes (2) angepaßt entspricht.

Beiderseits der Ringdüse (1) und der Abzugseinrichtung (13) ist je ein Blasformteil (19) einer zweiteiligen Blasform vorgesehen, das mittels einer Kolben-Zylinder-Einrichtung (20) gemäß einem Doppelpfeil (21) hin- und herbewegbar ist. Jedes Blasformteil (19) ist mit einem Bodenstück (22) versehen, das mit einer schrägen Auflagefläche (23) auf der Stirnfläche (18) des Düsenmundstückes (2) aufsitzen kann.

Die Vorrichtung gemäß Fig. 2 bis 4 ist so wie die gemäß Fig. 1 aufgebaut, was durch Verwendung der entsprechenden Bezugszeichen verdeutlicht ist. Gemäß Fig. 2 sitzt die Abzugseinrichtung (13) auf dem Düsenmundstück (1) auf und sind die Auflagefläche (17) sowie die zugehörige Stlrnfläche (18) entgegen der Abzugsrichtung abfallend gestaltet. Die Düsenöffnung (10) ist voll geoffnet, um Kunststoff in die Ausnehmung (16) zu spritzen, wobei das vordere Ende des Düsenkegels (3) mit dem vorderen Ende des Düsenmundstückes (2) fluchtet. In dem Düsenkegel (3) ist mittig ein Zapfen (24) angeordnet, der in nicht näher gezeigter Weise relativ zum Düsenmundstück (2) mittels Kolben-Zylinder-Einrichtung hin- und herverschiebbar ist und auf dem der Düsenkegel (3) gleitbar ist. Der Zapfen (24) weist eine Bohrung (25) auf, die einerends mit der Rohrleitung (6) für Blasluft verbunden ist und anderenends die Blasöffnung (8) bildet, deren Durchmesser kleiner ist als der der Bohrung (25). Eine Nadel (26) ragt mit einem Endstück absperrend in die Blasöffnung (8) und erstreckt sich durch die Bohrung (25) in die Rohrleitung (6). Mittels einer Kolben-Zylinder-Einrichtung (27) läßt sich die Nadel (26) gemäß einem Doppelpfeil (28) hin- und herverschieben.

Die Ausnehmung (16) ist gemäß Fig. 2 knopfartig ausgebildet und bildet ringsum einen Wulst, der einen seitlichen Hintergriff darstellt. Die Ausnehmung (16) ist in einem Formblock (29) der Abzugseinrichtung (13) vorgesehen und in Abzugsrichtung von der Stirnfläche eines Stempels (30) begrenzt. Dieser Stempel (30) ist relativ zum Formblock (29) mittels einer Kolben-Zylinder-Einrichtung (31) in Richtung eines Doppelpfeiles (32) der Entformung wegen hin- und herbewegbar. Der Stempel (30) ragt in die Ausnehmung (16) hinein und mittels des Stempels laßt sich die in Abzugsrichtung verlaufende Abmessung der Ausnehmung verändern.

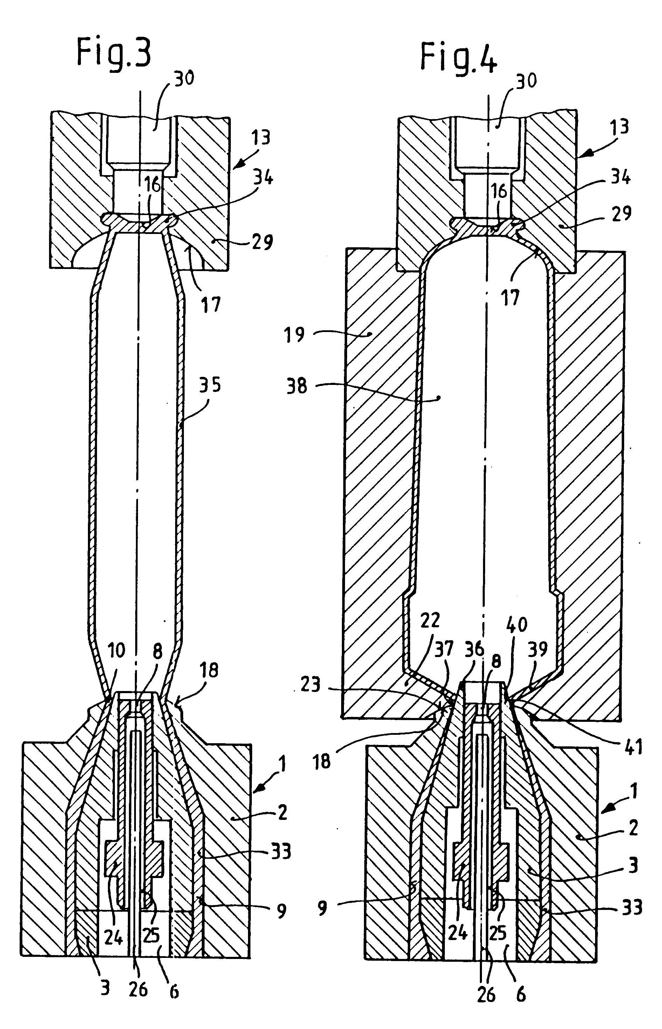

Gemäß Fig. 2 wird thermoplastischer Kunststoff (33) in die Ausnehmung (16) gespritzt, so daß ein Kopfstück (34) entsteht, wobei die Düsenöffnung (10) voll geöffnet ist und die Blasöffnung (8) geschlossen ist. Sodann wird durch Zurückziehen der Nadel (26) die Blasöffnung (8) geöffnet und wird durch Vorschieben des Düsenkegels (3) die Düsenöffnung (10) etwas verengt. Bei dieser in Fig. 3 gezeigten Stellung wird ein Rohrabschnitt (35) gezogen, indem die Abzugseinrichtung (13) von der Ringdüse (1) wegbewegt wird, wobei der Rohrabschnitt sich aufgrund zugeführter Blasluft schon etwas aufweitet. Gemäß Fig. 4 sind die Blasformteile (19) an das Düsenmundstück (2) und die Abzugseinrichtung (13) herangefahren, wodurch die Blasform gebildet ist. Der Düsenkegel (3) ist voll nach vorne gefahren, so daß die Düsenöffnung abgesperrt ist und ein Endstück (36) des Düsenkegels aus der Ringdüse (1) nach vorne herausragt. Die Bodenstücke (22) drücken mit Randkanten (37) den Rohrabschnitt (35) haltend gegen das Endstück (36). Der Rohrabschnitt wird aufgeblasen und es entsteht der Korperteil (38) eines Hohlkörpers, der an dem dem Kopfstück (34) gegenüberliegenden Ende einen Boden (39) aufweist, der mittig einen Durchbruch (40) besitzt, der von einem unregelmäßigen Rand (41) begrenzt ist.

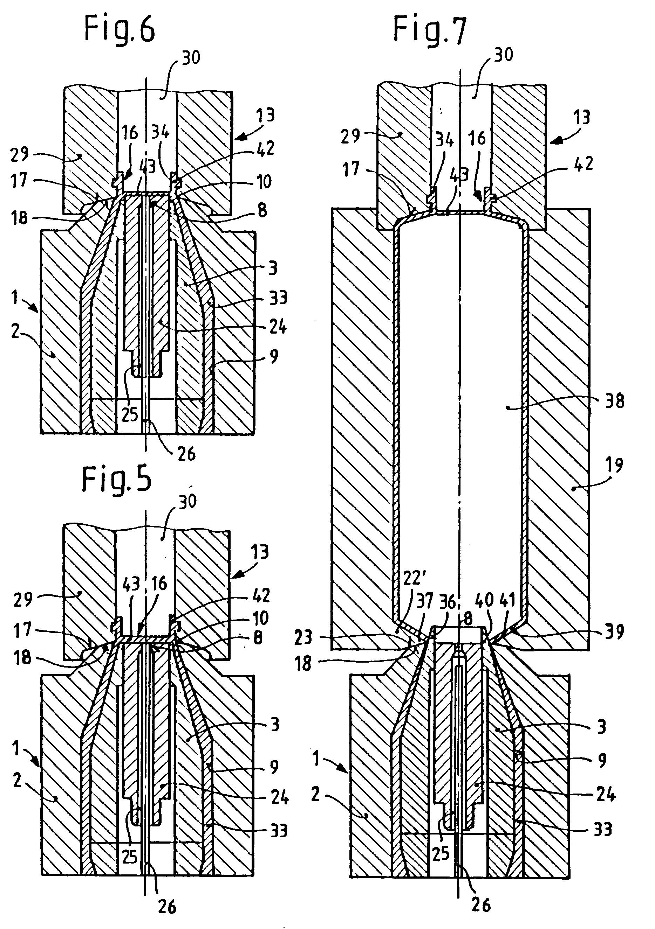

Die Vorrichtung gemäß Fig. 5 bis 7 entspricht im wesentlichen der Vorrichtung gemäß Fig. 2 bis 4, was durch Verwendung gleicher Bezugszeichen berücksichtigt ist. Die Vorrichtung gemäß Fig. 5 bis 7 ist jedoch hinsichtlich der Gestaltung des Kopfstückes (34) unterschiedlich, was nachfolgend erläutert wird. Der Unterschied bezieht sich zum einen auf die außere Form und zum anderen auf die Herstellungsweise. Es ist nämlich das Kopfstück (34) wie ein Napf ausgebildet, der aus einer Ringwand und einer Querwand besteht, wozu die Ausnehmung (16) eine ringwandartige Höhlung (42) und eine Querwand-Höhlung (43) bildet. Hierzu ragt der Stempel (30) deutlich in die Ausnehmung (16) des Formblockes (29), wobei er gemäß Fig. 5 weniger weit herausragt als gemäß Fig. 6, so daß die Querwand-Hohlung (43) in Fig. 5 dicker ist als in Fig. 6. Diese Preßbewegung des Stempels (30) wird auf das teilerkaltete Kopfstück (34) ausgübt, um die Querwand membranartig zu gestalten, wie es durch Spritzen nicht möglich ist.

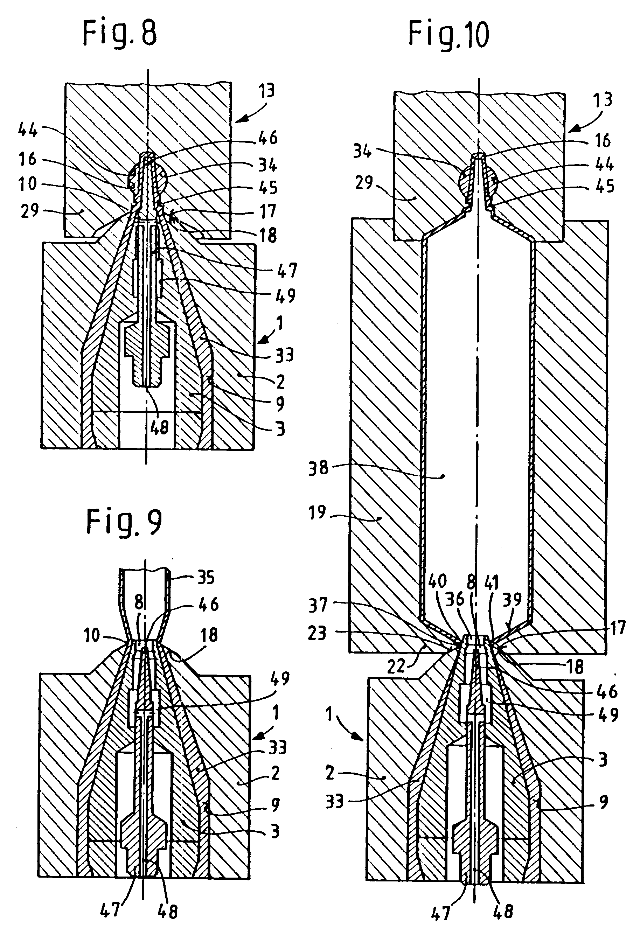

Die Vorrichtung gemäß Fig. 8 bis 10 entspricht im wesentlichen der Vorrichtung gemäß Fig. 2 bis 4, was durch Verwendung gleicher Bezugszeichen berücksichtigt ist. Die Vorrichtung gemäß Fig. 8 bis 10 ist jedoch insofern unterschiedlich, als die Abzugseinrichtung (13) keinen Stempel aufweist. Auch wird gemäß Fig. 8 und 9 das Spritzen des Kopfstückes (34) und das Ausziehen des Rohrabschnittes (35) bei der gleichen größten Öffnungsweite der Düsenöffnung (10), d.h. bei nicht vorgeschobenem Düsenkegel (3) durchgeführt. Hinzu kommen folgende Unterschiede in der Gestaltung der Blaseinrichtung und der Ausnehmung (16) der Abzugseinrichtung (13):

Die Ausnehmung (16) ist nippelartig länglich ausgebildet, verjüngt sich in Abzugsrichtung im Querschnitt, weist lappenartige Nebenhohlräume (44) auf und bildet nahe dem, der Ringdüse zugewandten Ende eine umlaufende Querschnittsverengung (45). Gemäß Fig. 8 ragt in diese Ausnehmung (16) ein länglich dünner Fortsatz (46), dessen Querschnitt sich in Abzugsrichtung verjüngt. Das sich ergebende Kopfstück (34) ist aus Fig. 8 ersichtlich, hat die Form einer nippelartigen, hohlen Kappe, ist mit seitlichen Laschen versehen und besitzt an dem, dem Hohlkörper-Körperteil zugewandten Ende eine in sich geschlossene umlaufende ringartige Abreiß-Wanddickenverringerung.

Der Fortsatz (46) sitzt vorne an einer Nadel (47), die gemäß Fig. 8 dem Verschließen der Blasoffnung (8) dient. Die Nadel (47) dient auch der Zufuhr der Blasluft, indem sie mit einer axialen Bohrung (48) versehen ist, die neben dem dichtenden, verschließenden Bereich der Nadel seitlich möndet. Diese seitlichen Mündungen sind vom Rand der Blasöffnung (8) gemaß Fig. 8 dichtend verschlossen. Mit Abstand hinter diesem dichtenden Bereich durchquert die Nadel (47) eine Kammer (49) im Düsenkegel (3), die nach hinten von einem Sims abgeschlossen ist, der die Nadel gleitbar dichtend aufnimmt. Wenn die Nadel (47) zurückgezogen ist und die Blasöffnung (8) freigibt, so gelangt aus den seitlichen Mundungen der Bohrung (48) austretende Blasluft in die Kammer (49) und von dort zur Blasöffnung (8). Diese Gestaltung der Blaseinrichtung ist stets anwendbar und in der Regel in Verbindung mit dem der Formung des Kopfstückes dienenden Fortsatz vorgesehen.

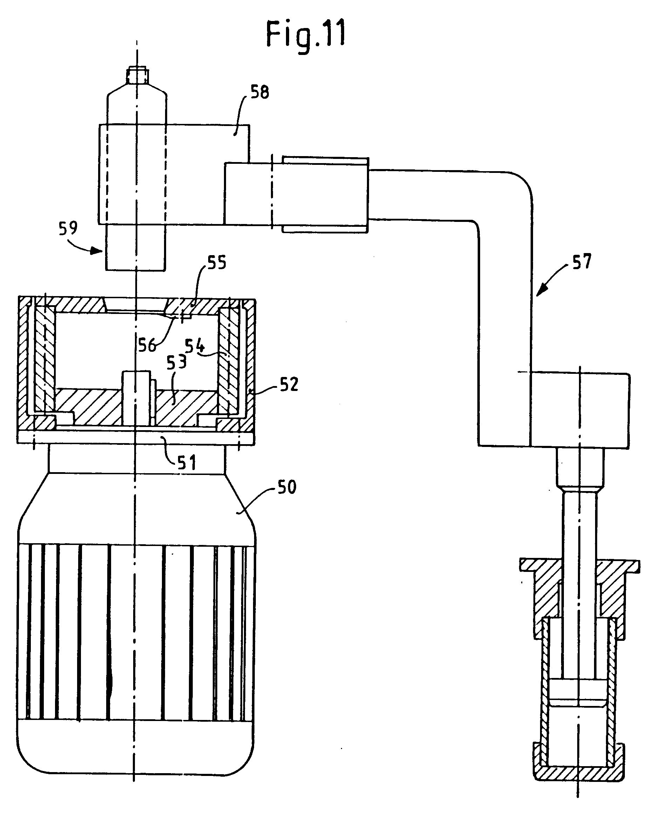

Die Vorrichtung zum Abschneiden gemäß Fig. 11 besitzt einen Motor (50), der auf seinem Gehäuse eine Platte (51) mit einer rundumlaufenden Schutzwand (52) trägt. Die Welle des Motors (50) treibt eine Scheibe (53), die über Bolzen (54) einen Deckel (55) trägt. Der Deckel (55) ist mittig durchbrochen und ist mit einem in den Durchbruch ragenden Messer (56) versehen. Ein Robotor (57) mit einem Greifer (58) holt den hergestellten Hohlkörper (59) aus der geöffneten Blasform, bringt ihn über die Vorrichtung zum Abschneiden und schiebt das untere Ende des Hohlkörpers durch den Durchbruch des Deckels (55). Der abgeschnittene untere Endbereich fliegt durch die Zwischenräume zwischen dem Bolzen (54) weg.

## Patentansprüche

1. Vorrichtung zum Herstellen eines einerends offenen und anderenends geschlossenen Hohlkörpers aus thermoplastischem Kunststoff,
mit einem durch Spritzgießen geformten geschlossenen Endbereich und einem durch Blasen eines daran einstückig anschließenden Rohrabschnittes (35) geformten Körperteil (38) mit offenem Endbereich,
bei der eine Ringdüse (1) einen Düsenkegel (3) in einem Düsenmundstück (2) aufweist, die eine unter Abscherung des Kunststoffes verschließbare ringspaltartige Düsenöffnung (10) begrenzen,
bei der eine Führungseinrichtung (13) mit einer Ausnehmung (16) für den geschlossenen Endbereich gegenüber der Ringdüse (1) in axialer Richtung hin- und herverschiebbar angeordnet ist,
bei der Blasformteile (19) einer mehrteiligen Blasform seitlich hin- und herbewegbar angeordnet sind und Bodenstücke (22) aufweisen, die in Höhe der Ringdüse (1) angeordnet sind und in zusammengeschobener Stellung der Blasformteile auf der Ringdüse (1) aufsitzen,
bei der die auf der Ringdüse (1) aufsitzenden Bodenstücke (22) den vom offenen Endbereich gebildeten Durchbruch freilassen, und bei der eine Blaseinrichtung (8) zum Einblasen von Luft in den Rohrabschnitt (35) innerhalb der Ringdüse (1) angeordnet ist,
**dadurch gekennzeichnet,**
daß die Führungseinrichtung als Abzugseinrichtung (13) mit seitlichem Hinterschnitt der Ausnehmung (16) ausgebildet ist und
daß die Ausnehmung (16) knopfartig mit ringsum verlaufendem, den Hinterschnitt bildendem Wulst ausgebildet ist.

2. Vorrichtung zum Herstellen eines einerends offenen und anderenends geschlossenen Hohlkörpers aus thermoplastischem Kunststoff,
mit einem durch Spritzgießen geformten geschlossenen Endbereich und einem durch Blasen eines daran einstückig anschließenden Rohrabschnittes (35) geformten Körperteil (38) mit offenem Endbereich,
bei der eine Ringdüse (1) einen Düsenkegel (3) in einem Düsenmundstück (2) aufweist, die eine unter Abscherung des Kunststoffes verschließbare ringspaltartige Düsenöffnung (10) begrenzen,
bei der eine Führungseinrichtung (13) mit einer Ausnehmung (16) für den geschlossenen Endbereich gegenüber der Ringdüse (1) in axialer Richtung hin- und herbewegbar ist,
bei der Blasformteile (19) einer mehrteiligen Blasform seitlich hin- und herbewegbar angeordnet sind und Bodenstücke (22) aufweisen, die in Höhe der Ringdüse (1) angeordnet sind und in zusammengeschobener Stellung der Blasformteile (19) auf der Ringdüse (1) aufsitzen,
bei der die auf der Ringdüse (1) aufsitzenden Bodenstücke (27) den vom offenen Endbereich gebildeten Durchbruch (40) freilassen,
und bei der eine Blaseinrichtung (8) zum Einblasen von Luft in den Rohrabschnitt (35) innerhalb der Ringdüse (1) angeordnet ist,
**dadurch gekennzeichnet,**
daß die Führungseinrichtung als Abzugseinrichtung (13) mit seitlichem Hinterschnitt der Ausnehmung (16) ausgebildet ist und daß die Ausnehmung (16) als ringwandartige Höhlung (42) mit einer der Ringdüse (1) zugewandten Querwand-Höhlung (43) ausgebildet ist.

3. Vorrichtung zum Herstellen eines einerends offenen und anderenends geschlossenen Hohlkörpers aus thermoplastischem Kunststoff,
mit einem durch Spritzgießen geformten geschlossenen Endbereich und einem durch Blasen eines daran einstückig anschließenden Rohrabschnittes (35) geformten Körperteil (38) mit offenem Endbereich,
bei der eine Ringdüse (1) einen Düsenkegel (3) in einem Düsenmundstück (2) aufweist, die eine unter Abscherung des Kunststoffes verschließbare ringspaltartige Düsenöffnung (10) begrenzen,
bei der eine Führungseinrichtung (13) mit einer Ausnehmung (16) für den geschlossenen Endbereich gegenüber der Ringdüse (1) in axialer Richtung hin- und herverschiebbar angeordnet ist,
bei der Blasformteile (19) einer mehrteiligen Blasform seitlich hin- und herbewegbar angeordnet sind und Bodenstücke (22) aufweisen, die in Höhe der Ringdüse (1) angeordnet sind und in zusammengeschobener Stellung der Blasformteile (19) auf der Ringdüse (1) aufsitzen,
bei der die auf der Ringdüse (1) aufsitzenden Bodenstücke (22) den vom offenen Endbereich gebildeten Durchbruch (40) freilassen,
und bei der eine Blaseinrichtung (8) zum Einblasen von Luft in den Rohrabschnitt (35) innerhalb der Ringdüse (1) angeordnet ist,
**dadurch gekennzeichnet,**
daß die Führungseinrichtung als Abzugseinrichtung (13) mit seitlichem Hinterschnitt der Ausnehmung (16) ausgebildet ist,
daß in dem Düsenkegel (3) eine axial hin- und herverschiebbare Nadel (47) angeordnet ist, die mit einem Fortsatz (46) in die Ausnehmung (16) ragt, und
daß der Fortsatz (46) länglich dünn ausgebildet ist und mit der Abzugseinrichtung (13) einen nippelartigen Hohlraum bildet.

4. Vorrichtung nach Anspruch 3, **dadurch gekennzeichnet,** daß der Hohlraum an seinem der Ringdüse (1) zugewandten Ende eine umlaufende Querschnittsverengung (45) aufweist.

5. Vorrichtung nach einem der Ansprüche 1 bis 4, **dadurch gekennzeichnet,** daß die Ausnehmung (16) auf ihrer der Ringdüse (1) zugewandten Seite von einem axial hin- und herverschiebbaren Zapfen (24) begrenzt ist, der bei auf der Ringdüse (1) aufsitzender Abzugseinrichtung (13) nach dem Spritzgießen des Endstückes (34) zum Dünnerpressen von Endstückquerwand gegen die Abzugseinrichtung (13) fahrbar ist.

## Claims

1. A device for producing a hollow body, which is open at one end and closed at the other end, from thermoplastic synthetic material,
with a closed end region formed by injection moulding, and a body part (38) with an open end region, formed by blowing a pipe portion (35) integral with the closed end region,
in which an annular die (1) has a die cone (3) in a die land (2), which delimit a die aperture (10) in the form of an annular gap which can be closed with shearing of the synthetic material,
in which a guide device (13) with a recess (16) for the closed end region is arranged so as to be displaceable backwards and forwards in the axial direction relative to the annular die (1),
in which blow-mould parts (19) of a multiple-part blow mould are arranged so as to be movable backwards and forwards laterally and have base pieces (22) which are arranged at the level of the annular die (1) and rest on the annular die (1) when the blow-mould parts are pushed together,
in which the base pieces (22) resting on the annular die (1) leave the gap formed by the open end region tree, and in which a blowing device (8) for blowing air into the pipe portion (35) is arranged inside the annular die (1),
**characterised in that** the guide device is formed as a discharge device (13) with the recess (16) being undercut at the side and **in that** the recess (16) is formed as a knob with a bead extending all round and forming the undercut.

2. A device for producing a hollow body, which is open at one end and closed at the other end, from thermoplastic synthetic material,
with a closed end region formed by injection moulding, and a body part (38) with an open end region, formed by blowing a pipe portion (35) integral with the closed end region,
in which an annular die (1) has a die cone (3) in a die land (2), which delimit a die aperture (10) in the form of an annular gap which can be closed with shearing of the synthetic material,
in which a guide device (13) with a recess (16) for the closed end region are movable backwards and forwards in the axial direction relative to the annular die (1),
in which blow-mould parts (19) of a multiple-part blow mould are arranged so as to be movable backwards and forwards laterally and have base pieces (22) which are arranged at the level of the annular die (1) and rest on the annular die (1) when the blow-mould parts (19) are pushed together,
in which the base pieces (22) resting on the annular die (1) leave the gap (40) formed by the open end region free,
and in which a blowing device (8) for blowing air into the pipe portion (35) is arranged inside the annular die (1),
**characterized in that** the guide device is formed as a discharge device (13) with the recess (16) being undercut at the side and **in that** the recess (16) is formed as an annular-wall-type cavity (42) with a cross-wall cavity (43) facing the annular die (1).

3. A device for producing a hollow body, which is open at one end and closed at the other end, from thermoplastic synthetic material,
with a closed end region formed by injection moulding, and a body part (38) with an open end region, formed by blowing a pipe portion (35) integral with the closed end region,
in which an annular die (1) has a die cone (3) in a die land (2), which delimit a die aperture (10) in the form of an annular gap which can be closed with shearing of the synthetic material,
in which a guide device (13) with a recess (16) for the closed end region is arranged so as to be displaceable backwards and forwards in the axial direction relative to the annular die (1),
in which blow-mould parts (19) of a multiple-part blow mould are arranged so as to be movable backwards and forwards laterally and have base pieces (22) which are arranged at the level of the annular die (1) and rest on the annular die (1) when the blow-mould parts (19) are pushed together,
in which the base pieces (22) resting on the annular die (1) leave the gap (40) formed by the open end region tree,
and in which a blowing device (8) for blowing air into the pipe portion (35) is arranged inside the annular die (1),
**characterized in that** the guide device is formed as a discharge device (13) with the recess (16) being undercut at the side,
**in that** a needle (47) is arranged in the die cone (3), which needle (47) is displaceable backwards and forwards axially and projects into the recess (16) with an extension (46), and
**in that** the extension (46) is long and thin in form and, together with the discharge device (13), forms a nipple-shaped hollow space.

4. A device according to Claim 3, **characterized in that** the hollow space has a circumferential narrowing (45) of its cross section at its end facing the annular die (1).

5. A device according to any one of Claims 1 to 4, **characterized in that,** on its side facing the annular die (1), the recess (16) is delimited by a peg (24) which is displaceable backwards and forwards axially and which, when the discharge device (13) is resting on the annular die (1) after the end piece (34) has been injection moulded, can be moved against the discharge device (13) in order to compress the cross wall of the end piece.

## Revendications

1. Dispositif pour la fabrication d'un corps creux en matière synthétique thermoplastique ouvert à une extrémité et fermé à l'autre extrémité,
comprenant une région d'extrémité fermée, formée par moulage par injection et une partie corps (38) possédant une région d'extrémité ouverte, formée par soufflage d'un segment tubulaire (35) qui est d'une seule pièce avec la première région d'extrémité,
dans lequel une buse annulaire (1) présente un cône (3) de buse placé dans une pièce de bouche (2) de buse, et qui délimite avec elle une ouverture (10) de buse en forme de fente annulaire, qui peut se fermer en cisaillant la matière synthétique ;
dans lequel un dispositif de guidage (13) muni d'un évidement (16) prévu pour la région d'extrémité fermée est disposé mobile en mouvement alternatif dans la direction axiale par rapport à la buse annulaire (1) ;
dans lequel des parties (19) de moule de soufflage, appartenant à un moule de soufflage en plusieurs parties, sont disposées mobiles en mouvement alternatif latéral et présentent des pièces de fond (22) qui sont disposées au niveau de la buse annulaire (1) et reposent sur la buse annulaire (1) dans la position resserrée des parties du moule de soufflage ;
dans lequel les pièces de fond (22) appuyées sur la buse annulaire (1) dégagent l'ouverture formée par la région d'extrémité ouverte ; et
dans lequel un dispositif de soufflage (8) est disposé à l'intérieur de la buse annulaire (1) pour insuffler de l'air dans le segment tubulaire (35),
caractérisé en ce que le dispositif de guidage est constitué par un dispositif de tirage (13) comportant une contre-dépouille latérale de l'évidement (16),
et en ce que l'évidement (16) présente la forme d'un bouton muni d'un bourrelet s'étendant sur tout le tour et qui forme la contre-dépouille.

2. Dispositif pour la fabrication d'un corps creux en matière synthétique thermoplastique ouvert à une extrémité et fermé à l'autre extrémité,
comprenant une région d'extrémité fermée, formée par moulage par injection et une partie corps (38) possédant une région d'extrémité ouverte, formée par soufflage d'un segment tubulaire (35) qui est d'une seule pièce avec la première région d'extrémité ;
dans lequel une buse annulaire (1) présente un cône (3) de buse placé dans une pièce de bouche (2) de buse, qui délimite avec elle une ouverture (10) de buse en forme de fente annulaire, qui peut se fermer en cisaillant la matière synthétique ;
dans lequel un dispositif de guidage (13) muni d'un évidement (16) prévu pour la région d'extrémité fermée est disposé mobile en mouvement alternatif dans la direction axiale par rapport à la buse annulaire (1) ;
dans lequel des parties (19) de moule de soufflage, appartenant à un moule de soufflage en plusieurs parties, sont disposées mobiles en mouvement alternatif latéral et présentent des pièces de fond (22) qui sont disposées au niveau de la buse annulaire (1) et reposent sur la buse annulaire (1) dans la position resserrée des parties (19) du moule de soufflage ;
dans lequel les pièces de fond (27) appuyées sur la buse annulaire (1) dégagent l'ouverture (40) formée par la région d'extrémité ouverte ; et
dans lequel un dispositif de soufflage (8) est disposé à l'intérieur de la buse annulaire (1) pour insuffler de l'air dans le segment tubulaire (35),
caractérisé en ce que le dispositif de guidage est constitué par un dispositif de tirage (13) comportant une contre-dépouille latérale de l'évidement (16) et en ce que l'évidement (16) est constitué par une empreinte (42) en forme de paroi annulaire, et munie d'une empreinte (43) de paroi transversale dirigée vers la buse annulaire (1).

3. Dispositif pour la fabrication d'un corps creux en matière synthétique thermoplastique ouvert à une extrémité et fermé à l'autre extrémité,
comprenant une région d'extrémité fermée, formée par moulage par injection et une partie corps (38) possédant une région d'extrémité ouverte, formée par soufflage d'un segment tubulaire (35) qui est d'une seule pièce avec la première région d'extrémité ;
dans lequel une buse annulaire (1) présente un cône (3) de buse placé dans une pièce de bouche (2) de buse, qui délimite une ouverture (10) de buse en forme de fente annulaire, qui peut se fermer en cisaillant la matière synthétique ;
dans lequel un dispositif de guidage (13) muni d'un évidement (16) prévu pour la région d'extrémité fermée est disposé mobile en mouvement alternatif dans la direction axiale par rapport à la buse annulaire (1) ;
dans lequel des parties (19) de moule de soufflage, appartenant à un moule de soufflage en plusieurs parties, sont disposées mobiles en mouvement alternatif latéral et présentent des pièces de fond (22) qui sont disposées au niveau de la buse annulaire (1) et reposent sur la buse annulaire (1) dans la position resserrée des parties (19) du moule de soufflage ;
dans lequel les pièces de fond (22) appuyée sur la buse annulaire (1) dégagent l'ouverture (40) formée par la région d'extrémité ouverte ; et
dans lequel un dispositif de soufflage (8) est disposé à l'intérieur de la buse annulaire (1) pour insuffler de l'air dans le segment tubulaire (35),
caractérisé en ce que le dispositif de guidage est constitué par un dispositif de tirage (13) présentant une contre-dépouille latérale de l'évidement (16) ;
en ce que, dans le cône (3) de buse, est disposée une aiguille (47) mobile en mouvement axial alternatif, qui s'engage dans l'évidement (16) par un prolongement (46), et
en ce que le prolongement (46) est de configuration allongée et mince et forme une empreinte en forme de mamelon avec le dispositif de tirage (13).

4. Dispositif selon la revendication 3, caractérisé en ce que l'empreinte présente, un retrécissement de section périphérique (45) à son extrémité dirigée vers la buse annulaire (1).

5. Dispositif selon une des revendications 1 à 4, caractérisé en ce que l'évidement (16) est limité, sur son côté dirigé vers la buse annulaire (1), par une cheville (24) mobile en mouvement axial alternatif, qui, après le moulage par injection de la pièce d'extrémité (34), peut s'avancer vers le dispositif de tirage (13) pour amincir la paroi transversale de la pièce d'extrémité lorsque le dispositif de tirage (13) est appuyé sur la buse annulaire (1).
